(19) Europäisches Patentamt / European Patent Office / Office européen des brevets

(11) **EP 3 592 618 B1**

(12) **EUROPEAN PATENT SPECIFICATION**

(45) Date of publication and mention
of the grant of the patent:
**16.11.2022  Bulletin 2022/46**

(21) Application number: **18710085.4**

(22) Date of filing: **28.02.2018**

(51) International Patent Classification (IPC):
*B60T 13/66* (2006.01)      *B60T 8/17* (2006.01)

(52) Cooperative Patent Classification (CPC):
**B60T 13/662; B60T 8/1708;** B60T 2250/02

(86) International application number:
**PCT/FI2018/050145**

(87) International publication number:
**WO 2018/162794 (13.09.2018 Gazette 2018/37)**

(54) **BRAKING SYSTEM**

BREMSSYSTEM

SYSTÈME DE FREINAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **07.03.2017  FI 20175204**

(43) Date of publication of application:
**15.01.2020  Bulletin 2020/03**

(73) Proprietor: **AK Usatrucks Oy
21290 Rusko (FI)**

(72) Inventor: **HENRIKSSON, Tuomas
21200 Rusko (FI)**

(74) Representative: **Aaltonen, Janne Lari Antero et al
Moosedog Oy
Vähäheikkiläntie 56 C
20810 Turku (FI)**

(56) References cited:
**US-A1- 2002 180 257      US-A1- 2009 204 303
US-A1- 2015 006 051      US-A1- 2016 129 896**

**Description**

TECHNICAL FIELD

The present disclosure relates generally to a braking system, and more particularly, to a braking system for controlling brakes of a towed vehicle, such as a trailer.

Such braking systems are known for example from US 2002/180257 A, which discloses an hydraulic brake system, and from US 2016/129896 A and US 2009/204303 A, which disclose electric brake systems.

BACKGROUND

Trailers are sometimes towed by tow vehicles such as automobiles and pick-up trucks. Trailers are often fitted with electric brakes that employ an electric brake controller installed in the tow vehicle to provide power to the trailers' electric brakes for them to operate. Some brake controllers may provide the same braking power or the same relative braking power to the trailer as provided to the tow vehicle. This may result in providing excess power to the trailer in some situations; for example, when the trailer is empty.

Accordingly, the electric brake controllers may be manually adjusted to suit various trailer loads and brake efficiency (or gain control). However, existing controllers may be limited in their operation and may result in dangerous situations such as inadequate braking force or wheel lockup. Therefore, some braking systems modify control signal to stop the trailer as a function of the trailer speed and deceleration of the trailer.

Further, some trailers employ electronic anti-lock braking system (ABS) that includes an ABS unit installed in the trailers. The ABS unit gets a braking command from a trailer brake controller of the tow vehicle. However, the command from the tow vehicle may not be related to the force used by the driver to apply brakes. Therefore, if the driver wants to make an emergency brake by pressing the brake pedal fully, the braking command signal remains same as in case of the driver gently pressing the brake pedal. This may result in accidents and loss of life and resources.

Further, in some systems the braking signal is fed to trailer via pressured air systems. The drivers of vehicles with such systems are used to non-linear behavior of the system. For example, the relative impact for the braking is different when braking lightly, and adding a bit more braking power when braking heavily.

Accordingly, some trailer braking systems employ force sensor at the brake pedal to sense the braking force applied by the driver of the tow vehicle. However, such systems may require driver to control the gain manually. In addition, the pressure sensor in the brake pedal may be complex, expensive and may break easily.

Therefore, in light of the foregoing discussion, there exists a need to overcome the aforementioned drawbacks.

SUMMARY

The present disclosure seeks to disclose a system for providing braking power to a trailer towed by a tow vehicle. Additionally, the disclosure seeks to disclose a system for providing a braking control signal to the trailer based on the force applied to a brake pedal by the driver of the tow vehicle. Further object of the present disclosure is to disclose a system for providing a braking power to a trailer towed by a tow vehicle based on a gain that is automatically calculated in the trailer based on the current weight of the trailer.

Accordingly, an embodiment of the present disclosure is a system for braking a trailer towed by a tow vehicle. The system comprises a signalling means for generating an electrical signal based on an action applied by a driver to a brake operating unit. Further, the system comprises means for determining weight of the trailer, a brake control unit and a communication means for providing the electrical signal from the signalling means to the brake control unit. The brake control unit is configured to use the determined weight of the trailer to obtain a gain value, calculate a braking power signal value using the electrical signal and the gain value, and provide a braking power control signal to an electric braking unit of a wheel of the trailer, based on the braking power signal value.

Embodiments of the present disclosure substantially eliminate or at least partially address the aforementioned problems in the prior art, and provide a system for braking a trailer wherein the braking control signal to the trailer is function of force applied to brake pedal by the driver. Further, the system for braking a trailer automatically calculates the gain in the trailer based on the weight of the trailer. Moreover, the system for braking a trailer detects a possible connection loss to the tow vehicle, calculates an emergency braking power signal value using the gain value and a pre-set maximum electrical signal value and provides the braking power control signal to the electric braking unit of a wheel of the trailer. The system enables a dynamic change of the braking power used in the trailer.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

FIG. 1 is a block diagram of a system for braking a trailer towed by a tow vehicle according to an embodiment.
FIG. 2 is a side view of a brake sensor connected to a brake pedal according to an embodiment.
FIG. 3 illustrates a circuit diagram of a system for braking a trailer towed by a tow vehicle according to an embodiment.

DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure is a system for braking a trailer towed by a tow vehicle. The tow vehicle may be connected to the trailer with a pivotable aisle (which may be alternatively referred to as drawbar). The system comprises a signalling means for generating an electrical signal based on an action applied by a driver to a brake operating unit. The brake operating unit may be a brake pedal. Further, the action applied by the driver may be a force, such that increasing the force may be configured to increase a braking power of the trailer and decreasing the force is configured to decrease the braking power of the trailer. The electrical signal may be configured to be based on a single continuous action.

In some embodiments, the signalling means for generating the electrical signal may include a sensor attachable to the brake operating unit of the tow vehicle. The generation of the electrical signal may be based on information from an antilock-braking system of the tow vehicle or a pressure reading from a brake system of-the tow vehicle. The sensor may be referred to as a brake force sensor, a brake sensor or a brake position sensor. The sensor may be one or more of a position sensor, a rotation sensor, and a pressure sensor. When the driver of the tow vehicle applies brakes with the brake pedal, an electrical signal is generated by the sensor. Alternatively, the generation of the electrical signal may be based on information from a distribution box of an antilock-braking system of the tow vehicle, or a pressure reading from a brake system of the tow vehicle. Further, the electrical signal may be generated by reading Controller Area Network (CAN) bus or similar network in the tow vehicle. The CAN bus is a vehicle bus standard designed to allow electronic control units and devices to communicate with each other. The CAN bus may indicate the force used in the brake pedal and that indication may be converted into an electrical signal.

In an exemplary embodiment, the sensor provides a 0 V electrical signal, when the driver applies no force to the brake pedal. Further, the sensor provides a 12 V electrical signal when full force is applied to the brake pedal. Accordingly, when 50 % of the force is applied on the brake pedal, the sensor provides a 6 V electrical signal. The voltage (VOUT) provided by the brake force sensor may be a function of the force applied on the brake pedal, as defined by equation (1) below.

$$VOUT = VREF \times (AppliedForce / MaximumForce) \quad (1)$$

wherein,

VOUT is the output voltage from the brake force sensor;

VREF is the nominal voltage used in the vehicle;

AppliedForce is the force applied on the brake pedal; and

MaximumForce is the maximum force that can be applied on the brake pedal. When the maximum force is applied, the brake pedal retracts to the maximum extent possible.

Further, the output voltage (VOUT) range may vary from 0 to 12 V; for example, 0-5 V or 0-24 V depending on the nominal voltage (VREF) of the electrical system used in the trailer and/or the tow vehicle.

Further, the system for braking a trailer comprises means for determining weight of the trailer. The means for determining weight may be selected from a load sensor attachable to a suspension system of the trailer, a force sensor attachable to a suspension system of the trailer, an air pressure sensor attachable to an air spring of the trailer, a tyre pressure monitoring system and controlling means of the air suspension system of the trailer. Indeed, the weight of the trailer can be obtained from an existing unit of the trailer system that determines the weight of the trailer. Moreover, information regarding a pulling force required to pull the trailer by the tow vehicle may be obtained from the tow vehicle to determine the weight of the trailer. The information about the weight can be transmitted either wirelessly or with wires to the braking control unit.

Yet further, the system for braking a trailer comprises a communication means for providing the electrical signal from the signalling means to a brake control unit. The brake control unit may be arranged in the trailer. Accordingly, the communication means may include one or more wired or wireless connections from the signalling means to a brake control signal in the tow vehicle. Further, the communication means may include one or more wired or wireless connections from the brake control signal unit to the brake control unit in the trailer. The wireless connections may include, but are not limited to a Bluetooth connection, a ZigBee connection, and Wireless local area network (WiFi) connection. The brake control unit being configured to use the determined weight of the trailer to obtain a gain value, calculate a braking power signal value using the electrical signal and the gain value, and provide a braking power control signal to electric braking units of one or more wheels of the trailer, based on the braking power signal value. The brake control unit may control the one or more wheels of the trailer; for example, via one or more of electrical connections.

Further, the gain value is obtained using a predetermined function or a look-up table stored in a memory of the brake control unit. For example, the predetermined function for forming the gain value may be dividing the determined weight by a reference value. In another embodiment, the reference value may be pre-set in the brake control unit and may be equal to the sum of the weight of an empty trailer and a weight of a maximum allowed load.

In an exemplary embodiment, the gain (G) may be calculated using equation 2 below.

$$G = CurrentWeight / MaxWeight \quad (2)$$

wherein,

CurrentWeight is obtained by adding the weight of the empty trailer and the current load in the trailer; and

MaxWeight is obtained by adding the weight of the empty trailer and the maximum load allowed on the trailer.

For example, the trailer may weight 2000 kg and carry a load of 1000 kg. The maximum allowed load on the trailer may be 5000 kg. Therefore, the CurrentWeight is 3000 kg and MaxWeight is 7000 kg. Accordingly, the gain (G) according to the equation 2 will be 3000/7000 = 3/7 = 0.43. Similarly, if the current load is 4000 kg, such that CurrentWeight is 6000kg, the gain is 6000/7000 = 6/7 = 0.86. Further, if the trailer is empty, then the gain is 2000/7000 = 2/7 = 0.29.

In alternative embodiments, the gain value may be obtained using different functions, which may be non-linear functions.

Additionally, the brake control signal unit may be configured to convert the electrical signal to a number value representing the value of the electrical signal and to send the representing value over a wireless communication link to the brake control unit, to be used as the electrical signal for calculating the braking power signal.

In a further embodiment, the brake control unit may be further configured to detect connection loss to the tow vehicle, calculate an emergency braking power signal value using the gain value and a pre-set maximum electrical signal value, and provide the braking power control signal to the electric braking unit of a wheel of the trailer, based on the emergency braking power signal value. In a yet further embodiment, an emergency braking system may provide mechanical power to a mechanical braking unit of at least one wheel of the trailer.

In a further embodiment, the brake sensor may be employed for measuring the force applied by the driver of the tow vehicle to the brake pedal. The brake sensor may be arranged to be in connection with the brake pedal via a rod. The rod may be pivotably connected to the brake pedal at a pivoting point. The brake pedal may be connected to a chassis of the tow vehicle via a rod.

As the driver presses the brake pedal, it moves the brake pedal which causes the rod (connecting the brake pedal to the brake sensor) to rotate with respect to the brake sensor. The rod (connecting the brake pedal to the brake sensor) is arranged to rotate a voltage controller in the brake sensor. For example, the voltage controller may be a variable resistor. Therefore, the voltage output of the sensor may be a function of force applied to the brake pedal.

In another aspect, an embodiment of the present disclosure is a circuit diagram of a system for braking the trailer towed by the tow vehicle. A brake position sensor is connected to a brake pedal in the tow vehicle. The brake position sensor provides an electrical signal via a connector to a brake control unit in the trailer. Further, the brake control unit receives the weight reading from a weight sensor to determine the weight of the trailer. The brake control unit uses the reading from the weight sensor, the weight of the trailer and the maximum weight allowed on the trailer to calculate gain (G). For example, the brake control unit may calculate the gain (G) using the equation 2 described above. The gain (G) is then used to determine a braking power signal value from the electrical signal received from the brake position sensor. The braking power signal value is calculated using the electrical signal and gain; for example, by multiplying the electric signal with the gain. Further, a pulse width modulated signal may be formed based on the gain (G) and the electrical signal received from the brake position sensor. Finally, the braking power signal value is used to generate a braking power control signal, which is fed via a wired connection to an electric brake in a wheel of the trailer.

Further, the system for braking a trailer towed by a tow vehicle may comprise an emergency mechanical brake, which is used in case the braking control unit does not receive the electrical signal from the tow vehicle via the connector. The emergency brakes may use a predefined gain value for adjusting the applied braking power.

Moreover, the circuit diagram includes an additional battery in the trailer to provide electricity to the brake control unit, in case of losing connection to the tow vehicle. A charging system of the tow vehicle may be used to charge the battery in the trailer.

The trailer brake system may also have an accelerometer sensor to ensure that deceleration caused by braking does not exceed predetermined values. Moreover, a user interface (UI) in the tow vehicle may indicate operation of the system for braking to the driver of the tow vehicle.

The present description also relates to a method for braking a trailer towed by a tow vehicle, the method comprising

- creating an electrical signal based on an action applied by a driver to a brake operating unit,
- determining weight of the trailer,
- using the determined weight of the trailer to obtain a gain value
- calculating a braking power signal value using the electrical signal and the gain value, and
- providing a braking power control signal to an electric braking unit of a wheel of the trailer, based on the braking power signal value.

The various embodiments and features explained above in connection with the system apply mutatis mutandis to the method as described above.

DETAILED DESCRIPTION OF THE DRAWINGS

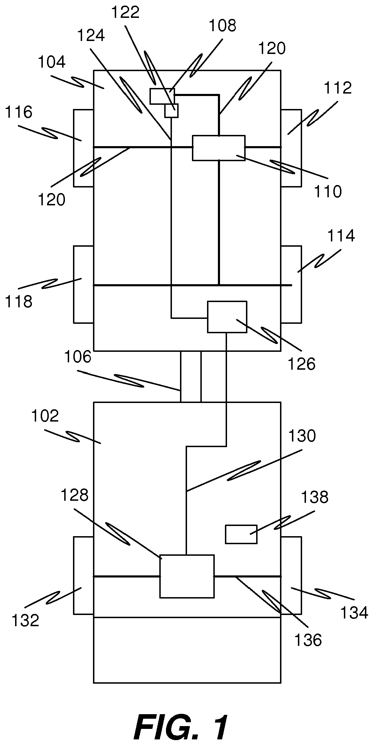

Figure 1 is a block diagram of a system for braking a trailer 102 towed by a tow vehicle 104 according to an embodiment. The tow vehicle 104 is connected to the trailer 102 with a pivotable aisle 106. The driver of the tow vehicle 104 may use a brake pedal 108 to reduce the speed of the combination of the tow vehicle 104 and the trailer 102. When the driver applies brakes with the brake pedal 108, typically hydraulic information is fed via a distribution box 110 to the four wheels 112, 114, 116 and 118 of the tow vehicle 104 via hydraulic connections 120.

The system for braking a trailer 102 towed by a tow vehicle 104 further includes a brake force sensor 122 connected to the brake pedal 108. When the driver applies brakes with the brake pedal 108, an electrical signal is generated by the brake force sensor 122. The electrical signal is routed via a wired connection 124 to a brake control signal unit 126. The brake control signal unit 126 provides a corresponding signal to the brake control unit 128 in the trailer 102. The brake control signal unit 126 may provide the signal to the brake control unit 128 via a wired connection 130 or a wireless connection such as, but not limited to a Bluetooth connection, a ZigBee connection, and WiFi connection. The brake control unit 128 may be an anti-lock braking system (ABS) or a conventional non-ABS system. The brake control unit 128 controls the wheels 132 and 134 of the trailer 102; for example, via electrical connections 136 by providing a braking power control signal to an electric braking unit of the wheels.

In an alternative embodiment, the electrical signal for the brake control signal unit 126 is generated by reading Controller Area Network (CAN) bus or similar network in the tow vehicle 104. The CAN bus may indicate the force used in the brake pedal 108 and that indication may be converted into an electrical signal.

In another alternate embodiment, a distribution box 110 is an ABS system for the tow vehicle 104. Accordingly, information from the distribution box 110 may be used to generate the electrical signal for the brake control signal unit 126.

The brake control unit 128 receives a trailer weight signal from a weight sensor 138. The weight sensor 138 may be a sensor connected to a suspension system of the trailer 102. Thereafter, the weight is used to calculate gain (G). For example, the gain (G) may be calculated using equation 2 described above.

Thereafter, the brake control unit 128 calculates a braking power signal value using the electrical signal in the wired connection 130 and the gain (G) value. The brake control unit 128 then provides the braking power signal to the wheels 132 and 134 via an electrical connection 136. The signal in the wired connection 130 may be same as fed to the brake control signal unit 126 via the wired connection 124. Alternatively, it may be level adjusted; for example, to take account of different voltage ranges used in the tow vehicle 104 and the trailer 102. As an example, if the electrical signal input to the brake control signal unit 126 is between 0-12 V and the trailer requires 0-24 V, the input signal is multiplied with 2 in the brake control signal unit 126. As another example, the input voltages of 0-12 V may be converted to 12-0 V.

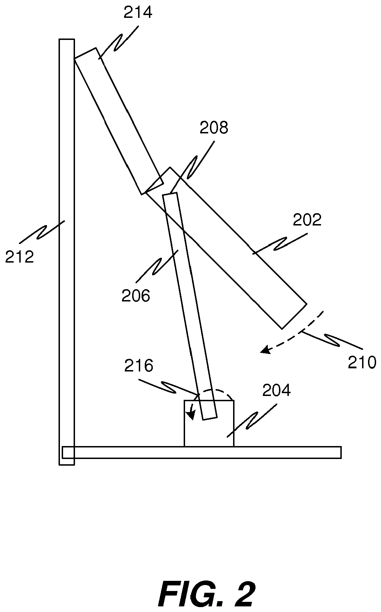

Figure 2 is a side view of a brake pedal 202 (similar to the brake pedal 108) according to an embodiment. A brake sensor 204 (similar to the brake force sensor 122) may be employed for measuring the force applied by the driver to the brake pedal 202. The brake sensor 204 may be arranged to be in connection with the brake pedal 202 via a rod 206. The rod 206 may be pivotally connected to the brake pedal 202 at a pivoting point 208. The brake pedal 202 may be connected to a chassis 212 of the tow vehicle 104 via a rod 214.

As the driver presses the brake pedal 202, it moves in the direction indicated with an arrow 210. As the brake pedal 202 goes down, it causes the rod 206 to rotate with respect to the brake sensor 204 in the direction indicated with an arrow 216. The rod 206 is arranged to rotate a voltage controller (not shown) in the brake sensor 204. For example, the voltage controller may be a variable resistor. Therefore, the voltage output of the sensor 204 may be a function of force applied to the brake pedal 202.

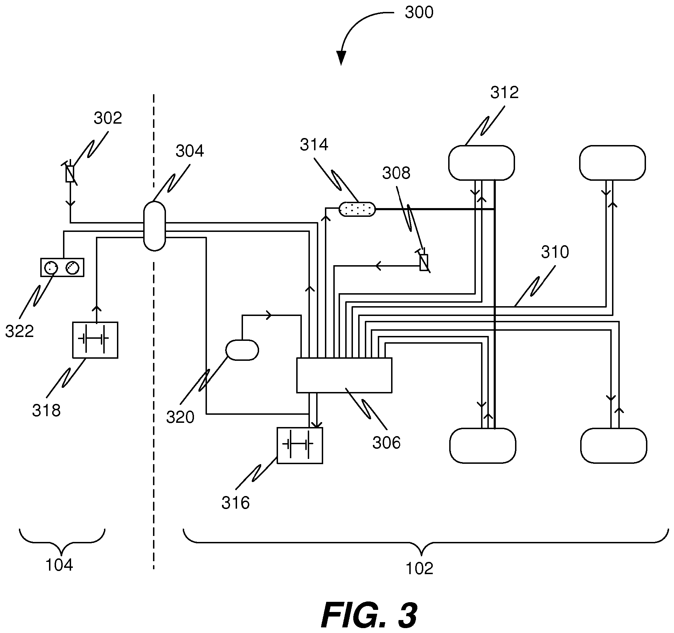

Figure 3 illustrates a circuit diagram 300 of a system for braking the trailer 102 towed by the tow vehicle 104 according to an embodiment. A brake position sensor 302 (similar to the brake force sensor 122 and the brake sensor 204) is connected to a brake pedal in the tow vehicle 104. The brake position sensor 302 provides an electrical signal via a connector 304 (similar the brake control signal unit 126) to a brake control unit 306 (similar the brake control unit 128) in the trailer 102. Further, the brake control unit 306 receives the weight reading from a weight sensor 308 to determine the weight of the trailer 102. The brake control unit 306 uses the reading from the weight sensor 308, the weight of the trailer 102 and the maximum weight allowed on the trailer 102 to calculate gain (G). For example, the brake control unit 306 may calculate the gain (G) using the equation 2 described above. The gain (G) is then used to determine a braking power signal value from the electrical signal received from the brake position sensor 302. The braking power signal value is calculated using the electrical signal and gain; for example, by multiplying the electric signal with the gain. Further, a pulse width modulated signal may be formed based on the gain (G) and the electrical signal received from the brake position sensor 302. Finally, the braking power signal value is used to generate a braking power control signal, which is fed via a wired connection 310 to an electric brake 312 in a wheel of the trailer 102.

Further, the system for braking a trailer 102 towed by a tow vehicle 104 comprises an emergency mechanical brake 314, which is used in case the braking control unit 306 does not receive the electrical signal from the tow vehicle 104 via the connector 304. The emergency brakes may use a predefined gain value for adjusting the applied braking power.

Moreover, the circuit diagram 300 includes an additional battery 316 in the trailer 102 to provide electricity to the brake control unit 306, in case of losing connection to the tow vehicle 104. A charging system 318 of the tow vehicle 104 may be used to charge the battery 316 in the trailer 102.

The trailer brake system may also have an accelerometer sensor 320 to ensure that deceleration caused by braking does not exceed predetermined values. Moreover, a user interface (UI) 322 in the tow vehicle 104 may indicate operation of the system for braking to the driver of the tow vehicle 104.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. Further components such as a brake control unit and a brake control signal unit can be integrated as a single unit or those can be separate units arranged in a tow vehicle and/or a trailer. The single unit can be arranged in the tow vehicle or the trailer.

## Claims

1.  A system for a dynamic change of braking power of a trailer (102) towed by a tow vehicle (104), the system comprising

    - signalling means (122, 204, 302) for generating an electrical signal based on an action applied by a driver to a brake operating unit (108, 202);
    - means for determining weight of the trailer (138, 308);
    - a brake control unit (128, 306);
    - communication means (124, 126, 130, 304) for providing the electrical signal from the signalling means to the brake control unit (128, 306);

the brake control unit (128, 306) being configured to

- use the determined weight of the trailer (102) to automatically obtain a gain value (G) by using a predetermined function or a look-up table stored in a memory of the brake control unit;
- calculate a braking power signal value using the electrical signal and the gain value;
- provide a braking power control signal to an electric braking unit of a wheel of the trailer (102), based on the braking power signal value.

2. A system according to claim 1, wherein the predetermined function for obtaining the gain value is dividing the determined weight by a reference value.

3. A system according to claim 2, wherein the reference value is pre-set in the brake control unit (128, 306) and is equal to sum of the weight of an empty trailer (102) and a weight of a maximum allowed load.

4. A system according to any of the preceding claims, wherein the signalling means for generating the electrical signal is a sensor (122, 204, 302) attachable to the brake operating unit of the tow vehicle (104), and generation of the electrical signal is additionally based on

- information from an antilock-braking system of the tow vehicle (104), or
- a pressure reading from a brake system of the tow vehicle (104).

5. A system according to any of the preceding claims, wherein the brake control unit (128, 306) is arrangeable in the trailer (102).

6. A system according to any of the preceding claims, wherein the means for determining weight of the trailer is selected from a load sensor attachable to a suspension system of the trailer (102), a force sensor attachable to a suspension system of the trailer, an air pressure sensor attachable to an air spring of the trailer, a tyre pressure monitoring system and controlling means of the air suspension system of the trailer.

7. A system according to any of the preceding claims, wherein the action applied by the driver is a force, and increasing the force is configured to increase a braking power of the trailer (102) and decreasing the force is configured to decrease the braking power of the trailer (102).

8. A system according to any of the preceding claims, wherein the brake control unit (128, 306) is further configured to

- detect connection loss to the tow vehicle (104);
- calculate an emergency braking power signal value using the gain value and a pre-set maximum electrical signal value;
- provide the braking power control signal to the electric braking unit of a wheel of the trailer (102), based on the emergency braking power signal value.

9. A system according to any of the preceding claims, further comprising an emergency braking system for providing mechanical power to a mechanical braking unit of at least one wheel of the trailer (102).

10. A system according to any of the preceding claims, further comprising a brake control signal unit (126) configured to convert the electrical signal to a number value representing the value of the electrical signal and to send the said representative value over a wireless communication link to the brake control unit (128), to be used as the electrical signal for calculating the braking power signal.

11. A system according to any of the preceding claims, wherein the electrical signal is configured to be based on a single continuous action.

**Patentansprüche**

1. System für eine dynamische Änderung der Bremsleistung eines Anhängers (102), der von einem Schleppfahrzeug (104) gezogen wird, wobei das System umfasst

- Signalisierungsmittel (122, 204, 302) zum Erzeugen eines elektrischen Signals basierend auf einer Aktion, die von einem Fahrer auf eine Bremssteuereinheit (108, 202) angewendet wird;
- Mittel zum Bestimmen des Gewichts des Anhängers (138, 308);
- eine Bremssteuereinheit (128, 306);
- Kommunikationsmittel (124, 126, 130, 304) zum Bereitstellen des elektrischen Signals von dem Signalisierungsmittel an die Bremssteuereinheit (128, 306);

wobei die Bremssteuereinheit (128, 306) konfiguriert ist zum

- Verwenden des bestimmten Gewichts des Anhängers (102), um automatisch einen Verstärkungswert (G) durch Verwenden einer vorbestimmten Funktion oder einer Nachschlagetabelle zu erhalten, die in einem Speicher der Bremssteuereinheit gespeichert ist;
- Berechnen eines Bremsleistungssignalwerts unter Verwendung des elektrischen Signals und des Verstärkungswerts;
- Bereitstellen eines Bremsleistungssteuersignals an eine elektrische Bremseinheit eines Rads des Anhängers (102) basierend auf dem Bremsleistungssignalwert.

2. System nach Anspruch 1, wobei die vorbestimmte Funktion zum Erhalten des Verstärkungswerts Teilen des bestimmten Gewichts durch einen Referenzwert ist.

3. System nach Anspruch 2, wobei der Referenzwert in der Bremssteuereinheit (128, 306) voreingestellt ist und gleich der Summe des Gewichts eines leeren Anhängers (102) und eines Gewichts einer maximal zulässigen Last ist.

4. System nach einem der vorstehenden Ansprüche, wobei das Signalisierungsmittel zum Erzeugen des elektrischen Signals ein Sensor (122, 204, 302) ist, der an der Bremsbetriebseinheit des Schleppfahrzeugs (104) anbringbar ist, und die Erzeugung des elektrischen Signals zusätzlich auf Folgendem basiert

- Informationen von einem Antiblockiersystem des Schleppfahrzeugs (104) oder
- einem Druckwert aus einem Bremssystem des Schleppfahrzeugs (104).

5. System nach einem der vorstehenden Ansprüche, wobei die Bremssteuereinheit (128, 306) in dem Anhänger (102) angeordnet werden kann.

6. System nach einem der vorstehenden Ansprüche, wobei das Mittel zum Bestimmen des Gewichts des Anhängers aus einem Lastsensor, der an einem Aufhängungssystem des Anhängers (102) befestigbar ist, einem Kraftsensor, der an einem Aufhängungssystem des Anhängers befestigbar ist, einem Luftdrucksensor, der an einer Luftfeder des Anhängers befestigbar ist, einem Reifendrucküberwachungssystem und einem Steuermittel des Luftfederungssystems des Anhängers ausgewählt ist.

7. System nach einem der vorstehenden Ansprüche, wobei die durch den Fahrer angewandte Aktion eine Kraft ist und Erhöhen der Kraft dazu konfiguriert ist, eine Bremsleistung des Anhängers (102) zu erhöhen, und Verringern der Kraft dazu konfiguriert ist, die Bremsleistung des Anhängers (102) zu verringern.

8. System nach einem der vorstehenden Ansprüche, wobei die Bremssteuereinheit (128, 306) ferner konfiguriert ist zum

- Erkennen des Verbindungsverlusts mit dem Schleppfahrzeug (104);
- Berechnen eines Notbremsleistungssignalwerts unter Verwendung des Verstärkungswerts und eines voreingestellten maximalen elektrischen Signalwerts;
- Bereitstellen des Bremsleistungssteuersignals an die elektrische Bremseinheit eines Rads des Anhängers (102) basierend auf dem Notbremsleistungssignalwert.

9. System nach einem der vorstehenden Ansprüche, ferner umfassend ein Notbremssystem zum Bereitstellen mechanischer Leistung an eine mechanische Bremseinheit von mindestens einem Rad des Anhängers (102).

10. System nach einem der vorstehenden Ansprüche, ferner umfassend eine Bremssteuersignaleinheit (126), die konfiguriert ist, um das elektrische Signal in einen Zahlenwert umzuwandeln, der den Wert des elektrischen Signals darstellt, und um den repräsentativen Wert über eine drahtlose Kommunikationsverbindung zu der Bremssteuereinheit (128) zu senden, um als das elektrische Signal zum Berechnen des Bremsleistungssignals verwendet zu werden.

11. System nach einem der vorstehenden Ansprüche, wobei das elektrische Signal konfiguriert ist, um auf einer einzigen kontinuierlichen Aktion zu basieren.

**Revendications**

1. Système pour un changement dynamique de puissance de freinage d'une remorque (102) remorquée par un véhicule tracteur (104), le système comprenant

   - des moyens de signalisation (122, 204, 302) pour générer un signal électrique sur la base d'une action appliquée par un conducteur à une unité de fonctionnement de frein (108, 202) ;
   - des moyens pour déterminer un poids de la remorque (138, 308) ;
   - une unité de commande de frein (128, 306) ;
   - des moyens de communication (124, 126, 130, 304) pour fournir le signal électrique provenant des moyens de signalisation à l'unité de commande de frein (128, 306) ;

   l'unité de commande de frein (128, 306) étant configurée pour

   - utiliser le poids déterminé de la remorque (102) pour obtenir automatiquement une valeur de gain (G) en utilisant une fonction prédéterminée ou une table de consultation stockée dans une mémoire de l'unité de commande de frein ;
   - calculer une valeur de signal de puissance de freinage en utilisant le signal électrique et la valeur de gain ;
   - fournir un signal de commande de puissance de freinage à une unité de freinage électrique d'une roue de la remorque (102), sur la base de la valeur de signal de puissance de freinage.

2. Système selon la revendication 1, dans lequel la fonction prédéterminée pour obtenir la valeur de gain est la division du poids déterminé par une valeur de référence.

3. Système selon la revendication 2, dans lequel la valeur de référence est prédéfinie dans l'unité de commande de frein (128, 306) et est égale à la somme du poids d'une remorque vide (102) et d'un poids d'une charge maximale autorisée.

4. Système selon l'une quelconque des revendications précédentes, dans lequel les moyens de signalisation pour générer le signal électrique sont un capteur (122, 204, 302) pouvant être fixé à l'unité de fonctionnement de frein du véhicule tracteur (104), et la génération du signal électrique est en outre basée sur

   - des informations provenant d'un système de freinage antiblocage du véhicule tracteur (104), ou
   - une lecture de pression provenant d'un système de frein du véhicule tracteur (104).

5. Système selon l'une quelconque des revendications précédentes, dans lequel l'unité de commande de frein (128, 306) peut être disposée dans la remorque (102).

6. Système selon l'une quelconque des revendications précédentes, dans lequel les moyens pour déterminer le poids de la remorque sont sélectionnés parmi un capteur de charge pouvant être attaché à un système de suspension de la remorque (102), un capteur de force pouvant être attaché à un système de suspension de la remorque, un capteur de pression d'air pouvant être attaché à un ressort pneumatique de la remorque, un système de surveillance de pression des pneus et des moyens de commande du système de suspension pneumatique de la remorque.

7. Système selon l'une quelconque des revendications précédentes, dans lequel l'action appliquée par le conducteur est une force, et l'augmentation de la force est configurée pour augmenter une puissance de freinage de la remorque (102) et la diminution de la force est configurée pour diminuer la puissance de freinage de la remorque (102).

8. Système selon l'une quelconque des revendications précédentes, dans lequel l'unité de commande de frein (128, 306) est en outre configurée pour

   - détecter une perte de connexion au véhicule tracteur (104) ;

- calculer une valeur de signal de puissance de freinage d'urgence en utilisant la valeur de gain et une valeur de signal électrique maximale prédéfinie ;
- fournir le signal de commande de puissance de freinage à l'unité de freinage électrique d'une roue de la remorque (102), sur la base de la valeur de signal de puissance de freinage d'urgence.

9. Système selon l'une quelconque des revendications précédentes, comprenant en outre un système de freinage d'urgence pour fournir une puissance mécanique à une unité de freinage mécanique d'au moins une roue de la remorque (102).

10. Système selon l'une quelconque des revendications précédentes, comprenant en outre une unité de signal de commande de frein (126) configurée pour convertir le signal électrique en une valeur numérique représentant la valeur du signal électrique et pour envoyer ladite valeur représentative sur une liaison de communication sans fil à l'unité de commande de frein (128), pour être utilisée en tant que signal électrique pour calculer le signal de puissance de freinage.

11. Système selon l'une quelconque des revendications précédentes, dans lequel le signal électrique est configuré pour être basé sur une seule action continue.

**FIG. 1**

**FIG. 2**

**FIG. 3**

**EP 3 592 618 B1**

## REFERENCES CITED IN THE DESCRIPTION

**Patent documents cited in the description**

- US 2002180257 A
- US 2016129896 A
- US 2009204303 A